# EUROPEAN PATENT APPLICATION

(11) **EP 4 836 114 A1**
(43) Date of publication of application: **04.11.2026**
(21) Application number: 24914879.2
(22) Date of filing: 06.09.2024
(51) Int. Cl.: H01M 50/184

(54) **BATTERY CELL, BATTERY, AND ELECTRICAL APPARATUS**

(30) Priority: 05.01.2024 CN 202420031881 U
(71) Applicant: Contemporary Amperex Technology Co., Limited, Ningde, Fujian 352100 (CN)
(72) Inventor: CHEN, Wenwei, Ningde, Fujian 352100 (CN); LIN, Denghua, Ningde, Fujian 352100 (CN); ZHENG, Yulian, Ningde, Fujian 352100 (CN); LI, Quankun, Ningde, Fujian 352100 (CN); WANG, Peng, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2024/117481
(87) International publication number: WO 2025/145657

(57) **Abstract**

A battery cell (102), a battery (100), and an electrical apparatus, belonging to the technical field of batteries. The battery cell (102) comprises: a first housing wall (11), electrode columns (2), and sealing insulation assemblies (3). The first housing wall (11) is provided with mounting holes (12). The electrode columns (2) comprise penetrating portions (21) arranged in the mounting holes (12) in a penetrating manner, and first abutting portions (22) and second abutting portions (23) connected to the penetrating portions (21) and abutting against two sides of the first housing wall (11). The first abutting portions (22) abut against the first housing wall (11) by means of riveting. The sealing insulation assemblies (3) are insulated and fitted between the electrode columns (2) and the first housing wall (11), and comprise first insulating pieces (31) at least partially arranged between the first abutting portions (22) and the first housing wall (11), and second insulating pieces (32) at least partially arranged between the second abutting portions (23) and the first housing wall (11). The elastic modulus of the first insulating pieces (31) is less than or equal to the elastic modulus of the second insulating pieces (32).

## Description

### CROSS-REFERENCE TO RELATED APPLICATIONS

The present application is based on and claims priority to Chinese Patent Application No. 202420031881.2, filed on January 5, 2024, the entire disclosure of which is incorporated herein by reference.

### TECHNICAL FIELD

The present application relates to the technical field of batteries, and in particular, to a battery cell, a battery, and an electric device.

### BACKGROUND

In recent years, new energy vehicles have been developed with a great leap. In the field of electric vehicles, power batteries play an irreplaceably important role as a power source of the electric vehicle. A power battery includes several battery cells. However, the battery cells need to be improved in reliability.

### SUMMARY

Embodiments of the present application provide a battery cell, a battery, and an electric device. The reliability of the battery cell can be improved.

In a first aspect, an embodiment of the present application provides a battery cell, including: a first housing wall, electrode posts, and sealing insulation assemblies. The first housing wall is provided with mounting holes. The electrode posts each include a penetrating portion arranged in the mounting hole in a penetrating manner, and a first abutting portion and a second abutting portion connected to the penetrating portion and abutting against two sides of the first housing wall. The first abutting portion abuts against the first housing wall by means of riveting. The sealing insulation assemblies are insulated and fitted between the electrode posts and the first housing wall, and each include a first insulating piece at least partially arranged between the first abutting portion and the first housing wall, and a second insulating piece at least partially arranged between the second abutting portion and the first housing wall. An elastic modulus of the first insulating piece is less than or equal to an elastic modulus of the second insulating piece. The first insulating piece is elastically compressed between the first abutting portion and the first housing wall to achieve sealing between the first abutting portion and the first housing wall.

In the above technical solution, when the electrode post is riveted to the first housing wall, the deformed first abutting portion applies an acting force to the first insulating piece. Since the elastic modulus of the first insulating piece is less than or equal to the elastic modulus of the second insulating piece, the first insulating piece has relatively strong deformability or relatively small rigidity relative to the second insulating piece, such that the first insulating piece can absorb the acting force applied by the first abutting portion deformed by riveting through deformation, thereby reducing the risk of cracking of the first insulating piece, improving the reliability of sealing between the first housing wall and the electrode post, and improving the reliability of the battery cell.

In some embodiments, the first insulating piece includes a first body portion and a first extension portion, where the first body portion is located on one side of the first abutting portion facing the first housing wall, and the first extension portion is connected to the first body portion, protrudes in a direction away from the first housing wall relative to the first body portion, and is stopped on one side of the first abutting portion away from a central axis of the mounting hole.

In the above technical solution, when a metal wire or the like is formed in the riveting process, if the metal wire overflows from an edge of the first abutting portion and contacts the first housing wall, a short circuit is easily formed. The first extension portion is arranged on an overflow path for blocking, such that the risk of the short circuit caused by the overflow of the metal wire can be reduced, thereby further improving the reliability of the battery cell.

In some embodiments, the first insulating piece includes a first body portion and a second extension portion, where the first body portion is located on one side of the first abutting portion facing the first housing wall, and the second extension portion is connected to the first body portion and extends into the mounting hole.

In the above technical solution, since the first insulating piece includes the second extension portion extending into the mounting hole, the second extension portion can be used to insulate and block the penetrating portion and a hole wall of the mounting hole, thereby further reducing the risk of a short circuit between the electrode post and the housing, and reducing the difficulty of insulating the penetrating portion from the housing as well as the use of the insulating piece. Moreover, since the first insulating piece includes the second extension portion extending into the mounting hole, when the first insulating piece is assembled to the first housing wall, the second extension portion can be used to perform an assembly positioning function, thereby improving assembly efficiency and stability of the first insulating piece, and facilitating assembly of the electrode post.

In some embodiments, a first corner arranged toward the first housing wall is formed at a joint between the second extension portion and the first body portion, and the first corner is formed as a chamfer.

In the above technical solution, when the electrode post is assembled to the first housing wall, the second corner easily presses the first corner, such that the first insulating piece is cracked from a position of the first corner. By setting the first corner to be in a chamfer form, when the second corner applies a force to the first corner, a force bearing area of the first corner can be increased, such that the force is distributed at the position of the first corner, thereby reducing the risk that the first insulating piece is cracked from the position of the first corner.

In some embodiments, a first corner arranged toward the first housing wall is formed at a joint between the second extension portion and the first body portion, the first housing wall includes a second corner arranged corresponding to the first corner, and the second corner is formed as a chamfer.

In the above technical solution, when the electrode post is assembled to the first housing wall, the second corner easily presses the first corner, such that the first insulating piece is cracked from the position of the first corner. By setting the second corner to be in a chamfer form, an area where the second corner applies a force to the first corner can be increased, such that the force is distributed at a force application position, thereby reducing concentrated pressing of the position of the first corner by the force, and lowering the risk that the first insulating piece is cracked from the position of the first corner.

In some embodiments, the second insulating piece includes: a second body portion and a third extension portion, where the second body portion is located on one side of the second abutting portion facing the first housing wall, and the third extension portion is connected to the second body portion and extends into the mounting hole.

In the above technical solution, since the second insulating piece includes the third extension portion extending into the mounting hole, the third extension portion can be used to insulate and block the penetrating portion and the hole wall of the mounting hole, thereby further reducing the risk of a short circuit between the electrode post and the housing, and reducing the difficulty of insulating the penetrating portion from the housing as well as the use of the insulating piece. Moreover, since the second insulating piece includes the third extension portion extending into the mounting hole, when the second insulating piece is assembled to the first housing wall, the third extension portion can be used to perform an assembly positioning function, thereby improving assembly efficiency and stability of the second insulating piece, and facilitating assembly of the electrode post.

In some embodiments, the second abutting portion is arranged on an inner side of the first housing wall and includes: a second body portion and a fourth extension portion, where the second body portion is located on one side of the second abutting portion facing the first housing wall; and the fourth extension portion is connected to one side of the second body portion away from the electrode post, and spaced between the first housing wall and an active material coating portion located on the inner side of the first housing wall.

In the above technical solution, the second insulating piece has a relatively large range, which can not only play a role of insulation between the second abutting portion and the first housing, but also play a role of insulation between the first housing wall and the active material coating portion, thereby simplifying a structure of the battery cell, reducing the production cost, and improving the production efficiency.

In some embodiments, the second insulating piece is elastically compressed between the second abutting portion and the first housing wall to achieve sealing between the second abutting portion and the first housing wall.

In the above technical solution, the second insulating piece also has elastic deformability, and the sealing between the second abutting portion and the first housing wall can be achieved by elastic compression, such that not only is the sealing between the first abutting portion and the first housing wall achieved by the elastic compression of the first insulating piece, but also the sealing between the second abutting portion and the first housing wall is achieved by the elastic compression of the second insulating piece, thereby further improving a sealing effect of the sealing insulation assembly between the first housing wall and the electrode post.

In some embodiments, the elastic modulus of the first insulating piece is less than or equal to 6 MPa, and a compression amount of the first insulating piece is 10% to 50%.

In the above technical solution, by setting the elastic modulus of the first insulating piece to be less than or equal to 6 MPa and setting the compression amount of the first insulating piece to be 10% to 50%, the problem of cracking of the first insulating piece can be avoided more effectively.

In some embodiments, the compression amount of the first insulating piece is 32% to 38%.

In the above technical solution, by setting the elastic modulus of the first insulating piece to be less than or equal to 6 MPa and setting the compression amount of the first insulating piece to be 32% to 38%, not only can the requirement of no cracking be met, but also a better sealing effect can be achieved.

In some embodiments, a material of the first insulating piece includes one of fluororubber, perfluoroalkoxy, polypropylene, and ethylene propylene diene monomer rubber.

In the above technical solution, the material of the first insulating piece is simple and commonly available, making mass production easy to achieve.

In some embodiments, in a radial direction of the mounting hole, an extension dimension of the second abutting portion is greater than or equal to an extension dimension of the first abutting portion.

In the above technical solution, when the electrode post is riveted to the first housing wall and the first abutting portion is processed by the riveting process, since the radial extension dimension of the second abutting portion is greater than or equal to the radial extension dimension of the first abutting portion, the second abutting portion can reliably abut against the first housing wall and is not easily disengaged from the mounting hole, such that the riveting can be smoothly performed, the first abutting portion can be riveted in place, and the stability of fit between the electrode post and the first housing after riveting can be improved.

In some embodiments, the first abutting portion abuts against an outer side of the first housing wall, and the second abutting portion abuts against the inner side of the first housing wall.

In the above technical solution, since the first abutting portion abuts against the outer side of the first housing wall, the first insulating piece can be mounted from the outer side of the first housing wall and at least partially exposed to the outer side of the first housing wall, and whether the first insulating piece is mounted can be directly observed from the outer side of the first housing wall, such that whether the first insulating piece is not mounted can be found without performing a gas leakage inspection process, thereby improving the production efficiency of the battery cell.

In some embodiments, the battery cell is provided with an accommodating cavity in the inner side of the first housing wall, the electrode post is provided with an accommodating groove that is open in a direction away from the accommodating cavity, the electrode post is provided with a communication hole, and the communication hole penetrates through a side groove wall of the accommodating groove close to the accommodating cavity, and communicates the accommodating cavity with the accommodating groove.

In the above technical solution, when an electrolyte is injected into the battery cell, the electrolyte can be injected into the accommodating groove, and then flow toward the accommodating cavity through the communication hole, where the accommodating groove can play a role of buffering the electrolyte, so as to improve the problems of splashing and overflowing of the electrolyte. Moreover, a side wall (i.e., a groove wall extending from a groove opening of the accommodating groove toward the accommodating cavity) of the accommodating groove can block the electrolyte from splashing to a certain extent, which reduces the contamination of the electrolyte to the outside and facilitates rapid liquid injection. Furthermore, since there is no need to separately form a liquid injection channel on the housing, there is no need to perform special processing on the housing, thereby reducing the structural complexity and processing difficulty of the housing.

In some embodiments, the battery cell includes a battery core assembly, where the battery core assembly includes an active material coating portion accommodated in the accommodating cavity and a conductive portion connected to the active material coating portion, and the conductive portion is arranged in the communication hole in a penetrating manner to be at least partially accommodated in the accommodating groove.

In the above technical solution, at least part of the conductive portion is accommodated in the first accommodating groove, such that at least part of the conductive portion occupies space in the first accommodating groove, thereby reducing the space occupied by the conductive portion in the accommodating cavity, saving the space in the accommodating cavity to accommodate the active material coating portion with a larger volume, and increasing the energy density of the battery cell, or reducing the size of the battery cell in the case where the energy density of the battery cell is unchanged.

In some embodiments, the battery cell includes a cover plate covering the accommodating groove, where the cover plate is provided with a liquid injection hole capable of communicating with the accommodating groove; and the battery cell further includes a sealing structure for sealing the liquid injection hole.

In the above technical solution, by forming the liquid injection hole in the cover plate that is relatively small and close to the outside, reliable sealing of a liquid injection inlet can be easily achieved through the sealing structure to improve the working reliability of the battery cell, and flexible and diversified designs of the sealing structure can be achieved.

In a second aspect, an embodiment of the present application further provides a battery, including the battery cell according to any one of the above solutions.

In the above technical solution, the reliablity of the battery cell according to the embodiment of the present application is improved, thereby helping improve the performance of the battery.

In a third aspect, an embodiment of the present application further provides an electric device, including the battery according to any one of the above solutions.

In the above technical solution, since the performance of the battery is improved, the working electrical performance of the electric device can be improved.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of a vehicle according to some embodiments of the present application;
FIG. 2 is an exploded view of a structure of a battery according to some embodiments of the present application.
FIG. 3 is a schematic structural diagram of a battery cell according to some embodiments of the present application;
FIG. 4 is an exploded view of a structure of the battery cell shown in FIG. 3;
FIG. 5 is a schematic diagram of an orthographic projection of a battery cell according to some embodiments of the present application;
FIG. 6 is a cross-sectional view taken along a line A-A in FIG. 5;
FIG. 7 is a partial enlarged view of a part B circled in FIG. 6;
FIG. 8 is a partial enlarged view of a part C circled in FIG. 7;
FIG. 9 is a schematic diagram of an electrode post and a sealing insulation assembly shown in FIG. 4;
FIG. 10 is a partial cross-sectional view of a battery cell according to some embodiments of the present application;
FIG. 11 is a partial cross-sectional view of a battery cell according to some embodiments of the present application; and
FIG. 12 is a partial cross-sectional view of a battery cell according to some embodiments of the present application.

Reference numerals: 1000: vehicle; X: first direction; Y: second direction; Z: third direction; 100: battery; 200: controller; 300: motor; 101: box; 1011: first box body; 1012: second box body; 102: battery cell; 1: housing; 10: accommodating cavity; 11: first housing wall; 111: second corner; 12: mounting hole; L: central axis; 13: second housing wall; 2: electrode post; 21: penetrating portion; 22: first abutting portion; 23: second abutting portion; 24: accommodating groove; 25: communication hole; 26: support portion; 3: sealing insulation assembly; 31: first insulating piece; 311: first body portion; 312: first extension portion; 313: second extension portion; 314: first corner; 32: second insulating piece; 321: second body portion; 322: third extension portion; 323: fourth extension portion; 33: insulating bracket; 4: battery core assembly; 41: active material coating portion; 42: conductive portion; 5: cover plate; 51: liquid injection hole; 6: sealing structure; 61: first sealing member; and 62: second sealing member.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

In the present application, the battery cell may include a lithium-ion secondary battery, a lithium-ion primary battery, a lithium-sulfur battery, a sodium-lithium ion battery, a sodium-ion battery, a magnesium-ion battery, or the like, which is not limited in the embodiments of the present application. The battery cell may be in a shape of a cylinder, a flat body, a cuboid, or the like, which is not limited in the embodiments of the present application. The battery cells are generally classified into three types in terms of packaging manner: cylindrical battery cells, prismatic battery cells, and pouch battery cells, which are not limited in the embodiments of the present application.

A battery mentioned in the embodiments of the present application refers to a single physical module including one or a plurality of battery cells to provide a higher voltage and capacity. For example, the battery mentioned in the present application may include a battery module or a battery pack, etc. The battery module generally includes a plurality of battery cells. The battery pack generally includes a box for encapsulating one or more battery cells or one or more battery modules. The box can prevent liquids or other foreign objects from affecting the charging or discharging of the battery cells.

The battery cell includes a housing, a battery core assembly, and an electrolyte, where the housing is configured to accommodate the battery core assembly and the electrolyte. The battery core assembly includes at least one electrode assembly, where the electrode assembly is composed of a positive electrode sheet, a negative electrode sheet, and a separator, and the electrode assembly may be of a wound structure, a laminated structure, etc. Working of the battery cell mainly relies on migration of metal ions between the positive electrode sheet and the negative electrode sheet.

The positive electrode sheet may generally include a positive electrode current collector and a positive electrode active material layer. The positive electrode active material layer is directly or indirectly coated on the positive electrode current collector. The positive electrode current collector not coated with the positive electrode active material layer protrudes from the positive electrode current collector coated with the positive electrode active material layer, and the positive electrode current collector not coated with the positive electrode active material layer serves as a positive electrode tab. Taking a lithium-ion battery as an example, the positive electrode current collector may be made of aluminum, and the positive electrode active material layer may be made from lithium cobalt oxide, lithium iron phosphate, ternary lithium, lithium manganese oxide, or the like.

The negative electrode sheet includes a negative electrode current collector and a negative electrode active material layer. The negative electrode active material layer is directly or indirectly coated on the negative electrode current collector. The negative electrode current collector not coated with the negative electrode active material layer protrudes from the negative electrode current collector coated with the negative electrode active material layer, and the negative electrode current collector not coated with the negative electrode active material layer serves as a negative electrode tab. The negative electrode current collector may be made of copper, and the negative electrode active material layer may be made of carbon, silicon, or the like.

To ensure high-current passage without any fusing, a plurality of positive electrode tabs are provided and stacked together to form a tab portion of a positive electrode, and a plurality of negative electrode tabs are provided and stacked together to form a tab portion of a negative electrode. The housing is provided with electrode posts, the tab portion of the positive electrode is electrically connected to the electrode post of the positive electrode, and the tab portion of the negative electrode is electrically connected to the electrode post of the negative electrode. For example, the tab portion may be connected to the electrode post to form a direct electrical connection between the tab portion to the electrode post. For another example, the battery core assembly may include an adapter piece, where the tab portion is connected to the adapter piece, and the adapter piece is connected to the electrode post, to form an indirect electrical connection between the tab portion and the electrode post.

The material of the separator is not limited, and may be, for example, polypropylene, polyethylene, or the like.

For some battery cells in the related art, the electrode post is mounted on the housing by riveting. To achieve insulation and sealing between the housing and the electrode post, insulating plastic is generally arranged between the electrode post and the housing before the electrode post is riveted. However, when the electrode post is riveted, the electrode post may be deformed by a force and presses the insulating plastic, and a weak part of the insulating plastic is easily cracked by the force. Once the insulating plastic is cracked, the reliability of insulation and sealing between the housing and the electrode post may be affected, thereby reducing the reliability of the battery cell.

In view of this, an embodiment of the present application provides a battery cell, including: a housing, electrode posts, and sealing insulation assemblies. The housing includes a first housing wall. The first housing wall is provided with mounting holes. The electrode posts each include a penetrating portion arranged in the mounting hole in a penetrating manner, and a first abutting portion and a second abutting portion connected to the penetrating portion and abutting against two sides of the first housing wall. The first abutting portion abuts against the first housing wall by means of riveting. The sealing insulation assemblies are insulated and fitted between the electrode posts and the first housing wall, and each include a first insulating piece at least partially arranged between the first abutting portion and the first housing wall, and a second insulating piece at least partially arranged between the second abutting portion and the first housing wall. An elastic modulus of the first insulating piece is less than or equal to an elastic modulus of the second insulating piece. The first insulating piece is elastically compressed between the first abutting portion and the first housing wall to achieve sealing between the first abutting portion and the first housing wall.

Thus, when the electrode post is riveted to the first housing wall, since the first abutting portion is formed by riveting, the deformed first abutting portion applies an acting force to the first insulating piece during riveting, such that the first insulating piece is easy to crack. By setting the elastic modulus of the first insulating piece to be less than or equal to the elastic modulus of the second insulating piece, the first insulating piece has relatively strong deformability or relatively small rigidity relative to the second insulating piece, such that the first insulating piece can absorb the acting force applied by the first abutting portion deformed by riveting through deformation, thereby reducing the risk of cracking of the first insulating piece, improving the reliability of insulation and sealing fit between the first housing wall and the electrode post, and improving the reliability of the battery cell.

An embodiment of the present application provides an electric device using a battery as a power source. The electric device may be, but is not limited to, a mobile phone, a tablet computer, a notebook computer, an electric toy, an electric tool, a battery-powered vehicle, an electric vehicle, a ship, a spacecraft, etc. The electric toy may include a stationary or mobile electric toy, such as a game machine, an electric car toy, an electric ship toy, an electric airplane toy, and the like, and the spacecraft may be an airplane, a rocket, a space shuttle, a spaceship, etc.

To facilitate description, in the following embodiments, as an example for description, an electric device in an embodiment of the present application is a vehicle 1000.

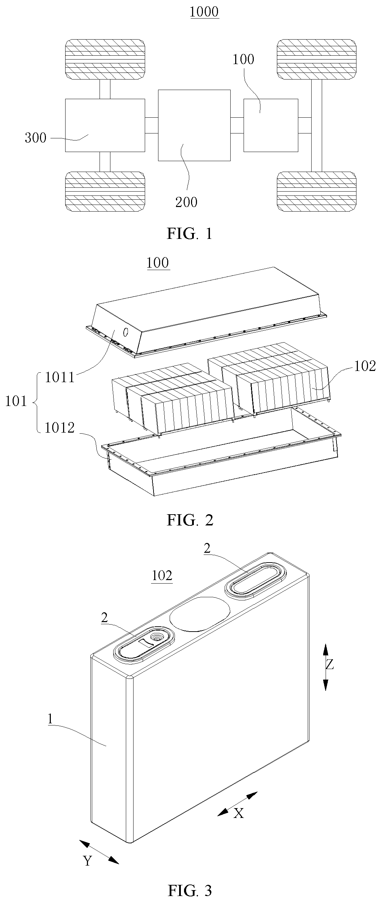

Reference is made to FIG. 1. FIG. 1 is a schematic structural diagram of a vehicle 1000 according to some embodiments of the present application. The vehicle 1000 may be a fuel vehicle, a gas vehicle, or a new energy vehicle, and the new energy vehicle may be a battery electric vehicle, a hybrid vehicle, or a range-extended electric vehicle. A battery 100 is arranged inside the vehicle 1000. The battery 100 may be arranged at a bottom, head, or tail of the vehicle 1000. The battery 100 may be configured to power the vehicle 1000, for example, the battery 100 may be used as an operating power source of the vehicle 1000. The vehicle 1000 may further include a controller 200 and a motor 300, where the controller 200 is configured to control the battery 100 to power the motor 300, for example, for a working power requirement of the vehicle 1000 during starting, navigating, and driving.

In some embodiments of the present application, the battery 100 may be used not only as the operating power source of the vehicle 1000, but also as a driving power source of the vehicle 1000, instead of or partially instead of fuel or natural gas to provide driving power for the vehicle 1000.

Reference is made to FIG. 2. FIG. 2 is an exploded view of a structure of a battery 100 according to some embodiments of the present application. The battery 100 includes a box 101 and a plurality of battery cells 102, where the battery cells 102 are accommodated in the box 101. The box 101 is configured to provide an assembly space for the battery cells 102, and the box 101 may have various structures. In some embodiments, the box 101 may include a first box body 1011 and a second box body 1012, where the first box body 1011 and the second box body 1012 cover each other, and the first box body 1011 and the second box body 1012 jointly define the assembly space for accommodating the battery cells 102. The second box body 1012 may be of a hollow structure with one open side, the first box body 1011 may be of a plate-shaped structure, and the first box body 1011 covers the open side of the second box body 1012, such that the first box body 1011 and the second box body 1012 jointly define the assembly space. Alternatively, the first box body 1011 and the second box body 1012 each may be of a hollow structure with one open side, and the open side of the first box body 1011 covers the open side of the second box body 1012. Certainly, the box 101 formed by the first box body 1011 and the second box body 1012 may be in various shapes, for example, a cylinder, a cuboid, or the like.

In the battery 100, a plurality of battery cells 102 may be subjected to series connection, parallel connection, or series-parallel connection. The series-parallel connection means that the plurality of battery cells 102 are subjected to both series connection and parallel connection. A plurality of battery cells 102 may be directly connected in series, in parallel, or in a combination of both, and the whole of the plurality of battery cells 102 is accommodated in the box 101. Certainly, the battery 100 may also be formed in a manner that a plurality of battery cells 102 are subjected to series connection, parallel connection, or series-parallel connection to form battery modules, and the plurality of battery modules are then subjected to series connection, parallel connection, or series-parallel connection to form an integrated unit, which is accommodated in the box 101. The battery 100 may further include other structures. For example, the battery 100 may further include a busbar component for implementing an electrical connection between the plurality of battery cells 102.

Each battery cell 102 may be a secondary battery or a primary battery, and may be a lithium-sulfur battery, a sodium-ion battery, or a magnesium-ion battery, but is not limited thereto. The battery cell 102 may be in a shape of a cylinder, a flat body, a cuboid, etc. FIG. 3 is a schematic structural diagram of a battery cell according to some embodiments of the present application. For example, referring to the embodiment shown in FIG. 3, a length direction of the battery cell 102 is a first direction X, a width direction of the battery cell 102 is a second direction Y, and a height direction of the battery cell 102 is a third direction Z, where the first direction X, the second direction Y, and the third direction Z are mutually perpendicular.

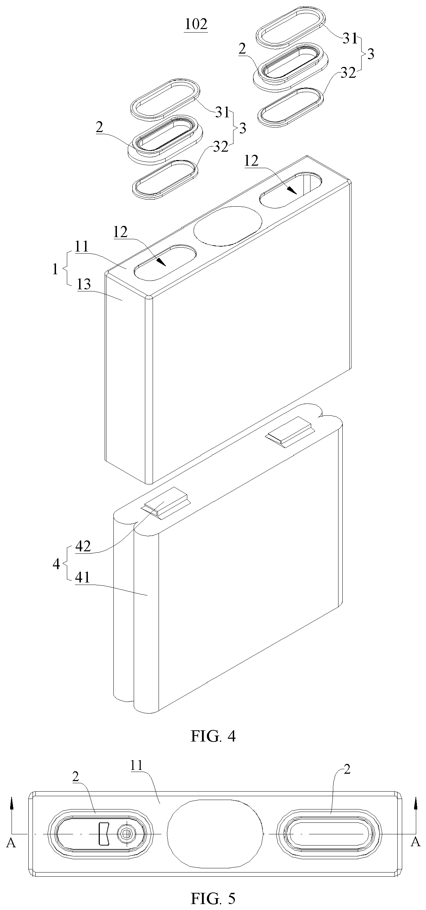

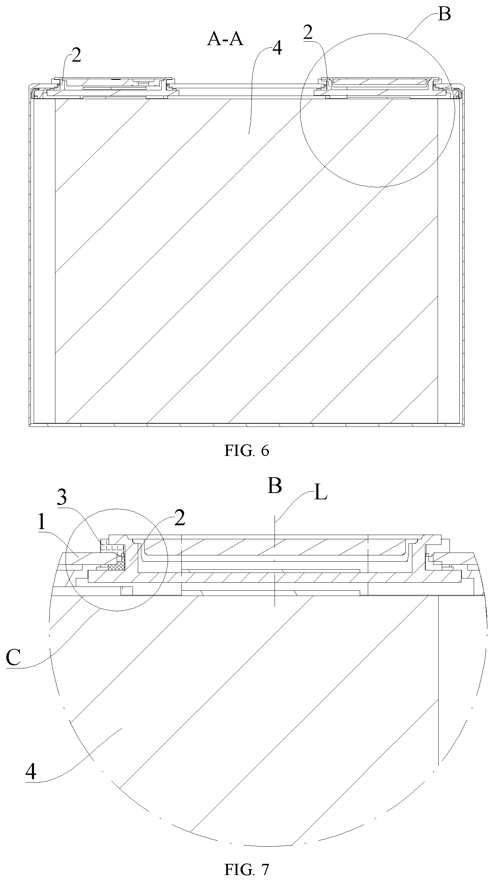

FIG. 4 is an exploded view of a structure of the battery cell 102 shown in FIG. 3. FIG. 5 is a schematic diagram of an orthographic projection of a battery cell 102 according to some embodiments of the present application. FIG. 6 is a cross-sectional view taken along a line A-A in FIG. 5. FIG. 7 is a partial enlarged view of a part B circled in FIG. 6. In some embodiments of the present application, referring to FIG. 3, FIG. 4, and FIG. 7, the battery cell 102 includes: a housing 1 and electrode posts 2, where the electrode posts 2 are arranged on the housing 1, and an accommodating cavity 10 is formed inside the housing 1. By way of example, the battery cell 102 includes a battery core assembly 4, where the battery core assembly 4 may include an active material coating portion 41 and a conductive portion 42 connected to the active material coating portion 41, the active material coating portion 41 is accommodated in the accommodating cavity 10, and the conductive portion 42 is welded to the electrode post 2, such that the conductive portion 42 is electrically connected between the active material coating portion 41 and the electrode post 2. It can be understood that the active material coating portion 41 may include a current collector coated with an active material layer, and the conductive portion 42 may include only a tab portion, or may include a tab portion and an adapter electrically connected to the tab portion, etc., without limitation herein.

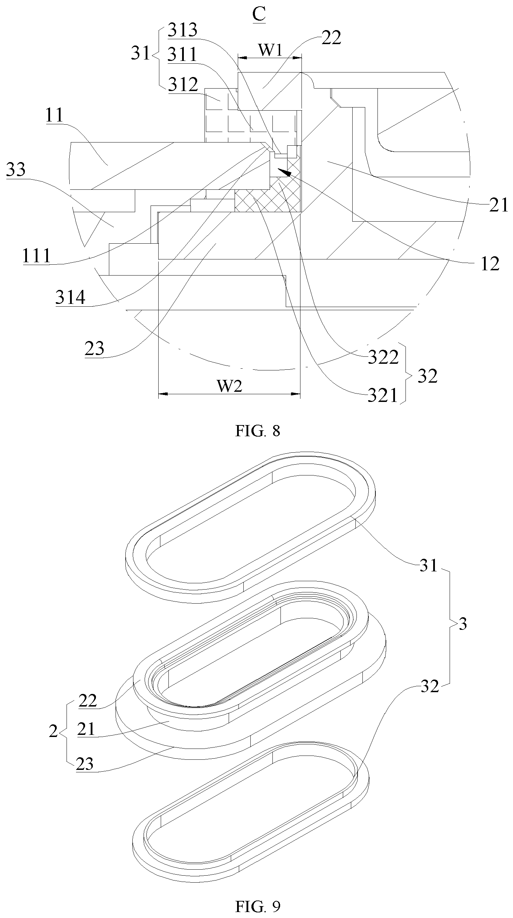

FIG. 8 is a partial enlarged view of a part C circled in FIG. 7. FIG. 9 is a schematic diagram of an electrode post 2 and a sealing insulation assembly 3 shown in FIG. 4. Referring to FIG. 4, FIG. 8, and FIG. 9, the housing 1 includes a first housing wall 11, where the first housing wall 11 is provided with mounting holes 12, and the electrode posts 2 are arranged in the mounting holes 12 in a penetrating manner to be mounted on the first housing wall 11. The electrode post 2 includes a penetrating portion 21, where the penetrating portion 21 is arranged in the mounting hole 12 in a penetrating manner, that is, at least part of the penetrating portion 21 is located in the mounting hole 12. When an axial direction of the mounting hole 12 is used as a projection direction and a plane perpendicular to the axial direction of the mounting hole 12 is used as a projection plane, a projection of the penetrating portion 21 on the projection plane falls within a projection range of the mounting hole 12 on the projection plane, such that the penetrating portion 21 can be arranged in the mounting hole 12 in a penetrating manner.

Referring to FIG. 8 and FIG. 9 again, the electrode post 2 further includes a first abutting portion 22 and a second abutting portion 23 connected to the penetrating portion 21 and abutting against two sides of the first housing wall 11. Specifically, the first abutting portion 22 and the second abutting portion 23 are both connected to the penetrating portion 21, and the first abutting portion 22 and the second abutting portion 23 respectively abut against two sides of the first housing wall 11 in a wall thickness direction. For example, two side surfaces of the first housing wall 11 in the wall thickness direction are respectively an outer surface and an inner surface, where the inner surface is a side surface of the first housing wall 11 facing the accommodating cavity 10, the outer surface is a side surface of the first housing wall 11 away from the accommodating cavity 10, one side of the outer surface away from the accommodating cavity 10 is an outer side of the outer surface, and one side of the inner surface facing the accommodating cavity 10 is an inner side of the inner surface. The first abutting portion 22 is connected to the penetrating portion 21 and extends away from the central axis L of the mounting hole 12 relative to the penetrating portion 21, the second abutting portion 23 is connected to the penetrating portion 21 and extends away from the central axis L of the mounting hole 12 relative to the penetrating portion 21, the first abutting portion 22 extends to the outer side of the outer surface of the first housing wall 11, and the second abutting portion 23 extends to the inner side of the inner surface of the first housing wall 11, or the first abutting portion 22 extends to the inner side of the inner surface of the first housing wall 11, and the second abutting portion 23 extends to the outer side of the outer surface of the first housing wall 11.

The first abutting portion 22 and the second abutting portion 23 respectively abut against the first housing wall 11, where the abutment does not require direct contact, and may be indirect contact, as long as they have the functions of abutting and limiting. Therefore, at least part of the first abutting portion 22 is directly opposite to the first housing wall 11 to prevent the electrode post 2 from moving toward the second abutting portion 23 relative to the first housing wall 11, and at least part of the second abutting portion 23 is directly opposite to the first housing wall 11 to prevent the electrode post 2 from moving toward the first abutting portion 22 relative to the first housing wall 11. It can be understood that when the axial direction of the mounting hole 12 is used as the projection direction and the plane perpendicular to the axial direction of the mounting hole 12 is used as the projection plane, a projection of the first abutting portion 22 on the projection plane and a projection of the first housing wall 11 on the projection plane have an overlapping region, and a part of the first abutting portion 22 corresponding to the overlapping region is directly opposite to the first housing wall 11; similarly, a projection of the second abutting portion 23 on the projection plane and the projection of the first housing wall 11 on the projection plane have an overlapping region, and a part of the second abutting portion 23 corresponding to the overlapping region is directly opposite to the first housing wall 11.

In this embodiment of the present application, the first abutting portion 22 abuts against the first housing wall 11 by riveting. By way of example, the forms of the penetrating portion 21 and the second abutting portion 23 of the electrode post 2 are consistent before and after assembly with the first housing wall 11, but the form of the first abutting portion 22 changes before and after assembly. After the electrode post 2 is assembled to the mounting hole 12 through the penetrating portion 21, the second abutting portion 23 abuts against the first housing wall 11, and the first abutting portion 22 is fabricated by a flanging and riveting process to achieve abutment between the first abutting portion 22 and the first housing wall 11. Thus, the electrode post 2 and the first housing wall 11 are conveniently assembled and reliably abutted.

Referring to FIG. 7 to FIG. 9 again, the battery cell 102 further includes sealing insulation assemblies 3 insulated and fitted between the electrode posts 2 and the first housing wall 11. That is, at least part of the sealing insulation assembly 3 is sandwiched between the first housing wall 11 and the electrode post 2, such that the electrode post 2 and the first housing wall 11 are indirectly fitted through the sealing insulation assembly 3, thereby achieving insulation and sealing between the first housing wall 11 and the electrode post 2. The sealing insulation assembly 3 includes a first insulating piece 31 and a second insulating piece 32, where at least part of the first insulating piece 31 is arranged between the first abutting portion 22 and the first housing wall 11 to implement insulation between the first abutting portion 22 and the first housing wall 11, and at least part of the second insulating piece 32 is arranged between the second abutting portion 23 and the first housing wall 11 to implement insulation between the second abutting portion 23 and the first housing wall 11.

In this embodiment of the present application, the elastic modulus of the first insulating piece 31 is less than or equal to the elastic modulus of the second insulating piece 32, and the first insulating piece 31 is elastically compressed between the first abutting portion 22 and the first housing wall 11 to achieve sealing between the first abutting portion 22 and the first housing wall 11. It can be understood that, since the first abutting portion 22 is in sealing fit with the first housing wall 11, the requirement that sealing between the electrode post 2 and the first housing wall 11 is achieved through the sealing insulation assembly 3 can be met, regardless of whether sealing between the second abutting portion 23 and the first housing wall 11 is achieved.

It can be understood that the first insulating piece 31 may be made of an electrolyte-resistant material, and when the first insulating piece 31 is elastically compressed between the first abutting portion 22 and the first housing wall 11 to achieve sealing between the first abutting portion 22 and the first housing wall 11, the problem that the electrolyte in the housing 1 leaks from the joint can be effectively improved by forming a sealing surface.

In this embodiment of the present application, when the electrode post 2 is riveted to the first housing wall 11, the deformed first abutting portion 22 applies an acting force to the first insulating piece 31. Since the elastic modulus of the first insulating piece 31 is less than or equal to the elastic modulus of the second insulating piece 32, the first insulating piece 31 has relatively strong deformability or relatively small rigidity relative to the second insulating piece 32, such that the first insulating piece 31 can absorb the acting force applied by the first abutting portion 22 deformed by riveting through deformation, thereby reducing the risk of cracking of the first insulating piece 31, improving the reliability of sealing between the first housing wall 11 and the electrode post 2, and improving the reliability of the battery cell 102.

In addition, when the elastic modulus of the second insulating piece 32 is greater than the elastic modulus of the second insulating piece 32, the second insulating piece 32 has a greater rigidity relative to the first insulating piece 31, and can play a supporting role to a certain extent, such that the overall compression amount of the sealing insulation assembly 3 is easy to control, and on the premise of ensuring the requirement of sealing between the electrode post 2 and the first housing wall 11, the processing and production difficulty can be reduced and the production efficiency can be improved.

In some embodiments of the present application, referring to FIG. 7 and FIG. 8 again, the first insulating piece 31 includes a first body portion 311 and a first extension portion 312, where the first body portion 311 is located on one side of the first abutting portion 22 facing the first housing wall 11, the first extension portion 312 is connected to the first body portion 311, and the first extension portion 312 protrudes in a direction away from the first housing wall 11 relative to the first body portion 311, and is stopped on one side of the first abutting portion 22 away from the central axis L of the mounting hole 12.

In the above technical solution, when a metal wire or the like is formed in the riveting process, if the metal wire overflows from an edge of the first abutting portion 22 and contacts the first housing wall 11, a short circuit is easily formed. The first extension portion 312 is arranged on an overflow path for blocking, such that the risk of the short circuit caused by the overflow of the metal wire can be reduced, thereby further improving the reliability of the battery cell 102.

In some embodiments of the present application, referring to FIG. 7 and FIG. 8 again, the first insulating piece 31 includes a first body portion 311 and a second extension portion 313, where the first body portion 311 is located on one side of the first abutting portion 22 facing the first housing wall 11, and the second extension portion 313 is connected to the first body portion 311 and extends into the mounting hole 12.

In the above technical solution, since the first insulating piece 31 includes the second extension portion 313 extending into the mounting hole 12, the second extension portion 313 can be used to insulate and block the penetrating portion 21 and a hole wall of the mounting hole 12, thereby further reducing the risk of a short circuit between the electrode post 2 and the housing 1, and reducing the difficulty of insulating the penetrating portion 21 from the housing 1 as well as the use of the insulating piece. Moreover, since the first insulating piece 31 includes the second extension portion 313 extending into the mounting hole 12, when the first insulating piece 31 is assembled to the first housing wall 11, the second extension portion 313 can be used to perform an assembly positioning function, thereby improving assembly efficiency and stability of the first insulating piece 31, and facilitating assembly of the electrode post 2.

By way of example, during production, the first insulating piece 31 and the second insulating piece 32 can be first respectively mounted to the first housing wall 11, then the electrode post 2 is arranged in the mounting hole 12 in a penetrating manner, and the electrode post 2 is riveted. Since the first insulating piece 31 and the first housing wall 11 are fitted through the second extension portion 313 and the mounting hole 12, the stability of relative positions of the first insulating piece 31 and the first housing wall 11 can be improved, such that when the electrode post 2 is arranged in the mounting hole 12 in a penetrating manner subsequently, the probability that the first insulating piece 31 leaves a mounting position can be reduced, and the success rate of assembly can be increased.

In some embodiments of the present application, referring to FIG. 8 again, a first corner 314 arranged toward the first housing wall 11 is formed at a joint between the second extension portion 313 and the first body portion 311, the first housing wall 11 includes a second corner 111 arranged corresponding to the first corner 314, and the first corner 314 is formed as a chamfer, where the chamfer may be a fillet or a bevel.

In the above technical solution, when the electrode post 2 is assembled to the first housing wall 11, the second corner 111 easily presses the first corner 314, such that the first insulating piece 31 is cracked from a position of the first corner 314. By setting the first corner 314 to be in a chamfer form, when the second corner 111 applies a force to the first corner 314, a force bearing area of the first corner 314 can be increased, such that the force is distributed at the position of the first corner 314, thereby reducing the risk that the first insulating piece 31 is cracked from the position of the first corner 314.

In some embodiments of the present application, referring to FIG. 8 again, a first corner 314 arranged toward the first housing wall 11 is formed at a joint between the second extension portion 313 and the first body portion 311, the first housing wall 11 includes a second corner 111 arranged corresponding to the first corner 314, and the second corner 111 is formed as a chamfer, where the chamfer may be a fillet or a bevel.

In the above technical solution, when the electrode post 2 is assembled to the first housing wall 11, the second corner 111 easily presses the first corner 314, such that the first insulating piece 31 is cracked from the position of the first corner 314. By setting the second corner 111 to be in a chamfer form, an area where the second corner 111 applies a force to the first corner 314 can be increased, such that the force is distributed at a force application position, thereby reducing concentrated pressing of the position of the first corner 314 by the force, and lowering the risk that the first insulating piece 31 is cracked from the position of the first corner 314.

In some embodiments of the present application, referring to FIG. 8 again, a first corner 314 arranged toward the first housing wall 11 is formed at a joint between the second extension portion 313 and the first body portion 311, the first housing wall 11 includes a second corner 111 arranged corresponding to the first corner 314, the first corner 314 is formed as a fillet or a bevel, and the second corner 111 is formed as a fillet or a bevel.

In the above technical solution, when the electrode post 2 is assembled to the first housing wall 11, the second corner 111 easily presses the first corner 314, such that the first insulating piece 31 is cracked from the position of the first corner 314. By setting the first corner 314 and the second corner 111 to be both in a chamfer form, the area where the second corner 111 applies a force to the first corner 314 can be increased, such that the force is distributed at the force application position, thereby reducing concentrated pressing of the position of the first corner 314 by the force. When the second corner 111 applies a force to the first corner 314, the force bearing area of the first corner 314 can be increased, such that the force is distributed at the position of the first corner 314, thereby reducing the risk that the first insulating piece 31 is cracked from the position of the first corner 314 from two aspects.

In some embodiments of the present application, referring to FIG. 8 again, regardless of whether at least one of the second corner 111 and the first corner 314 is processed into a chamfer form, a fit clearance can be formed between the second corner 111 and the first corner 314, such that the pressing of the second corner 111 on the first corner 314 can be reduced to a certain extent, thereby reducing the risk that the first insulating piece 31 is cracked from the position of the first corner 314.

In some embodiments of the present application, referring to FIG. 8 again, the second insulating piece 32 includes: a second body portion 321 and a third extension portion 322, where the second body portion 321 is located on one side of the second abutting portion 23 facing the first housing wall 11, and the third extension portion 322 is connected to the second body portion 321 and extends into the mounting hole 12.

In the above technical solution, since the second insulating piece 32 includes the third extension portion 322 extending into the mounting hole 12, the third extension portion 322 can be used to insulate and block the penetrating portion 21 and the hole wall of the mounting hole 12, thereby further reducing the risk of a short circuit between the electrode post 2 and the housing 1, and reducing the difficulty of insulating the penetrating portion 21 from the housing 1 as well as the use of the insulating piece. Moreover, since the second insulating piece 32 includes the third extension portion 322 extending into the mounting hole 12, when the second insulating piece 32 is assembled to the first housing wall 11, the third extension portion 322 can be used to perform an assembly positioning function, thereby improving assembly efficiency and stability of the second insulating piece 32, and facilitating assembly of the electrode post 2.

By way of example, during production, the first insulating piece 31 and the second insulating piece 32 can be first respectively mounted to the first housing wall 11, then the electrode post 2 is arranged in the mounting hole 12 in a penetrating manner, and the electrode post 2 is riveted. Since the second insulating piece 32 and the first housing wall 11 are fitted through the third extension portion 322 and the mounting hole 12, the stability of relative positions of the second insulating piece 32 and the first housing wall 11 can be improved, such that when the electrode post 2 is arranged in the mounting hole 12 in a penetrating manner subsequently, the probability that the second insulating piece 32 leaves a mounting position can be reduced, and the success rate of assembly can be increased.

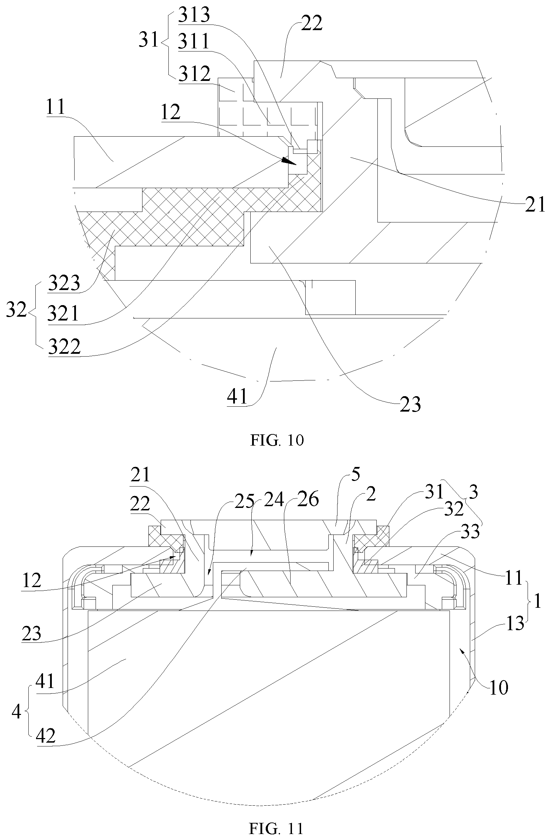

FIG. 10 is a partial cross-sectional view of a battery cell 102 according to some embodiments of the present application. In some embodiments of the present application, referring to FIG. 10, the second abutting portion 23 is arranged on an inner side of the first housing wall 11, and the second insulating piece 32 includes: a second body portion 321 and a fourth extension portion 323, where the second body portion 321 is located on one side of the second abutting portion 23 facing the first housing wall 11, and the fourth extension portion 323 is connected to one side of the second body portion 321 away from the electrode post 2 and is spaced between the first housing wall 11 and the active material coating portion 41 located on the inner side of the first housing wall 11.

In the above technical solution, the second insulating piece 32 has a relatively large range, which can not only play a role of insulation between the second abutting portion 23 and the first housing 1, but also play a role of insulation between the first housing wall 11 and the active material coating portion 41, thereby simplifying a structure of the battery cell 102, reducing the production cost, and improving the production efficiency.

In the related art, an insulating bracket needs to be arranged between the active material coating portion and the first housing wall. In the above technical solution, it is equivalent to integrating the second insulating piece and the insulating bracket into one piece, such that parts can be saved, the assembly efficiency can be improved, and the production cost can be reduced. Moreover, an extension dimension W2 of the second abutting portion 23 in a radial direction of the mounting hole 12 can be reduced, the cost of the electrode post 2 is reduced, a surface area of the electrode post 2 is reduced, and the voltage withstand strength of the electrode post 2 is improved.

Certainly, the present application is not limited thereto. For example, in other embodiments of the present application, referring to FIG. 8 again, the second insulating piece 32 may not include the fourth extension portion 323. In this case, the insulating bracket 33 arranged separately from the second insulating piece 32 can provide insulation between the first housing wall 11 and the active material coating portion 41.

In some embodiments of the present application, the second insulating piece 32 is elastically compressed between the second abutting portion 23 and the first housing wall 11 to achieve sealing between the second abutting portion 23 and the first housing wall 11.

In the above technical solution, the second insulating piece 32 also has elastic deformability, and the sealing between the second abutting portion 23 and the first housing wall 11 can be achieved by elastic compression, such that not only is the sealing between the first abutting portion 22 and the first housing wall 11 achieved by the elastic compression of the first insulating piece 31, but also the sealing between the second abutting portion 23 and the first housing wall 11 is achieved by the elastic compression of the second insulating piece 32, thereby further improving a sealing effect of the sealing insulation assembly 3 between the first housing wall 11 and the electrode post 2.

It is worth noting that, regardless of whether the second insulating piece 32 includes the fourth extension portion 323, the second insulating piece 32 can be set to have elastic deformability and be elastically compressed between the second abutting portion 23 and the first housing wall 11.

In some embodiments of the present application, when the second insulating piece 32 is elastically compressed between the second abutting portion 23 and the first housing wall 11 to achieve sealing between the second abutting portion 23 and the first housing wall 11, if the elastic modulus of the second insulating piece 32 is equal to the elastic modulus of the first insulating piece 31, the second insulating piece 32 and the first insulating piece 31 may be made of a same material, thereby reducing production difficulty. If the elastic modulus of the second insulating piece 32 is greater than the elastic modulus of the first insulating piece 31, the problem of cracking of the first insulating piece 31 can be better improved, and the difficulty of controlling the compression amount of the sealing insulation assembly 3 can be reduced.

In some embodiments of the present application, the elastic modulus of the first insulating piece 31 is less than or equal to 6 MPa, and a compression amount of the first insulating piece 31 is 10% to 50%. For example, the elastic modulus of the first insulating piece 31 is 4 MPa, 5 MPa, 6 MPa, etc., and the compression amount of the first insulating piece 31 is 10%, 20%, 30%, 40%, 50%, etc. It is verified by experiments that, by setting the elastic modulus of the first insulating piece 31 to be less than or equal to 6 MPa and setting the compression amount of the first insulating piece 31 to be 10% to 50%, no cracking occurs when the electrode post 2 is riveted. When the elastic modulus of the first insulating piece 31 is set to be greater than 6 MPa and the compression amount of the first insulating piece 31 is set to be less than 10%, the first insulating piece 31 is easily cracked when the electrode post 2 is riveted.

By way of example, when the elastic modulus of the first insulating piece 31 is less than or equal to 6 MPa, the compression amount of the first insulating piece 31 may also be set to 32% to 38%, such as 32%, 35%, or 38%, such that not only can the requirement of no cracking be met, but also a better sealing effect can be achieved.

It is worth noting that, for a material, the elastic modulus refers to a ratio of deformation to stress generated by the material when a force is applied, and describes a degree of elastic deformation of the material. For example, for a rubber material, the elastic modulus represents a degree of deformation of the material when subjected to a force. The smaller the elastic modulus is, the greater the elasticity of the material is, and the better the deformability is. Conversely, the larger the elastic modulus is, the smaller the deformability is. The rubber material will deform to a certain extent after being subjected to a force. The compression amount refers to a deformation amount of the material when it is pressed. For the rubber material, its compression amount has a large range of variation due to the particularity of its structure and properties. In general, the larger the elastic modulus is, the smaller the compression amount is. Therefore, in the process of producing and applying a rubber product, the required performance can be obtained by controlling the elastic modulus and the compression amount of the rubber material according to different requirements.

In some embodiments of the present application, the material of the first insulating piece 31 is not limited. For example, soft rubber or the like may be used, and the soft rubber is relatively soft, which is beneficial to improving the problem of cracking in the riveting process. For example, the material of the first insulating piece 31 may include one of fluororubber, perfluoroalkoxy, polypropylene (PP), and ethylene propylene diene monomer (EPDM) rubber. Thus, the material of the first insulating piece is simple and commonly available, making mass production easy to achieve. In the related art, polyphenylene sulfide (PPS, which is a new type of high-performance thermoplastic resin) is often used at a position of the first insulating piece with an elastic modulus of about 20 GPa, and the rigidity of the first insulating piece is much higher than the rigidity of the first insulating piece 31 with an elastic modulus of less than or equal to 6 MPa in this embodiment, such that there is a risk of cracking.

By way of example, the first insulating piece 31 is made of fluororubber (FKM) or perfluoroalkoxy (PFA). These two materials are resistant to the electrolyte and may have corresponding compression amounts of 10% to 50% and elastic moduli of about 6 MPa. It is verified by experiments that no cracking occurs when the electrode post 2 is riveted.

It can be understood that a riveting stroke of the first abutting portion 22 of the electrode post 2 can be controlled to make the compression amount of the first insulating piece 31 meet the requirements, thereby meeting the requirement of reliable sealing. It can be understood that when a wall thickness of the first body portion 311 of the first insulating piece 31 is X and the thickness after riveting is Y, the compression amount is (X-Y)/Y, for example, when X is 1.1 mm and Y is 0.7 mm, the compression amount is (1.1-0.7)/1.1 ≈ 36%.

In addition, when the elastic modulus of the second insulating piece 32 is consistent with the elastic modulus of the first insulating piece 31, the second insulating piece and the first insulating piece may be made of the same material or different materials. When the elastic modulus of the second insulating piece 32 is greater than the elastic modulus of the first insulating piece 31, the second insulating piece 32 can be made of polyphenylene sulfide (PPS, which is a new type of high-performance thermoplastic resin), a liquid crystal polymer (LCP), or the like, such that the second insulating piece 32 has high rigidity and plays a supporting role, and the compression amount of the sealing insulation assembly 3 can be better controlled, thereby improving the sealing performance.

In some embodiments of the present application, referring to FIG. 8, in the radial direction of the mounting hole 12, a connecting line between a center of the mounting hole 12 and any point on an edge of the mounting hole 12 is the radial direction, and the extension dimension W2 of the second abutting portion 23 is greater than or equal to the extension dimension W1 of the first abutting portion 22, that is, W2 ≥ W1.

In the above technical solution, when the first abutting portion 22 is processed by the riveting process, since the extension dimension W2 of the second abutting portion 23 is greater than or equal to the extension dimension W1 of the first abutting portion 22, the second abutting portion 23 can reliably abut against the first housing wall 11 and is not easily disengaged from the mounting hole 12, such that the riveting can be smoothly performed, the first abutting portion 22 can be riveted in place, and the stability of fit between the electrode post 2 and the first housing 1 after riveting can be improved.

In some embodiments of the present application, referring to FIG. 8, the first abutting portion 22 abuts against an outer side of the first housing wall 11, and the second abutting portion 23 abuts against the inner side of the first housing wall 11. The "inner side" is one side of the first housing wall 11 facing the accommodating cavity 10, and the opposite side thereof is the "outer side", that is, a side away from the accommodating cavity 10.

In the above technical solution, since the first abutting portion 22 abuts against the outer side of the first housing wall 11, the first insulating piece 31 can be mounted from the outer side of the first housing wall 11 and at least partially exposed to the outer side of the first housing wall 11, and whether the first insulating piece 31 is mounted can be directly observed from the outer side of the first housing wall 11, such that whether the first insulating piece 31 is not mounted can be found without performing a gas leakage inspection process, thereby improving the production efficiency of the battery cell 102.

In some embodiments of the present application, as shown in FIG. 11, the battery cell 102 is provided with an accommodating cavity 10 in the inner side of the first housing wall 11, the electrode post 2 is provided with an accommodating groove 24 that is open in a direction away from the accommodating cavity 10, the electrode post 2 is provided with a communication hole 25, and the communication hole 25 penetrates through a side groove wall of the accommodating groove 24 close to the accommodating cavity 10, and communicates the accommodating cavity 10 with the accommodating groove 24. For example, when the penetrating portion 21 is ring-shaped, the accommodating groove 24 is located in an inner ring region of the penetrating portion 21. For example, the accommodating groove 24 can be defined by the penetrating portion 21 and a support portion 26 located in the inner ring region of the penetrating portion 21 together.

Thus, when an electrolyte is injected into the battery cell 102, the electrolyte can be injected into the accommodating groove 24, and then flow toward the accommodating cavity 10 through the communication hole 25, where the accommodating groove 24 can play a role of buffering the electrolyte, so as to improve the problems of splashing and overflowing of the electrolyte. Moreover, a side wall (i.e., a groove wall extending from a groove opening of the accommodating groove 24 toward the accommodating cavity 10) of the accommodating groove 24 can block the electrolyte from splashing to a certain extent, which reduces the contamination of the electrolyte to the outside and facilitates rapid liquid injection. Furthermore, since there is no need to separately form a liquid injection channel on the housing 1, there is no need to perform special processing on the housing 1, thereby reducing the structural complexity and processing difficulty of the housing 1.

In some embodiments of the present application, as shown in FIG. 11, the battery cell 102 includes a battery core assembly 4, where the battery core assembly 4 includes an active material coating portion 41 accommodated in the accommodating cavity 10 and a conductive portion 42 connected to the active material coating portion 41, and the conductive portion 42 is arranged in the communication hole 25 in a penetrating manner to be at least partially accommodated in the accommodating groove 24.

It is worth noting that there may be one or more communication holes 25, and the conductive portion 42 may be arranged in at least one of the communication holes 25 in a penetrating manner. By way of example, at least one communication hole 25 can allow the electrolyte to pass through. For example, at least one communication hole 25 is vacant (i.e., the conductive portion 42 is not arranged in the communication hole in a penetrating manner), such that the electrolyte can pass through the communication hole without being hindered by the conductive portion 42. For another example, the electrolyte can still pass through the communication hole after the conductive portion 42 is arranged in at least one communication hole 25 in a penetrating manner.

Thus, at least part of the conductive portion 42 is accommodated in the accommodating groove 24, such that at least part of the conductive portion 42 occupies space in the accommodating groove 24, thereby reducing the space occupied by the conductive portion 42 in the accommodating cavity 10, saving the space in the accommodating cavity 10 to accommodate the active material coating portion 41 with a larger volume, and increasing the energy density of the battery cell 102, or reducing the size of the battery cell 102 in the case where the energy density of the battery cell 102 is unchanged.

In some embodiments, the conductive portion 42 is welded to the electrode post 2 to form an electrical connection, such that the battery core assembly 4 is output from an electrode at the electrode post 2. By way of example, as shown in FIG. 11, the conductive portion 42 is welded to a side groove wall of the accommodating groove 24 close to the accommodating cavity 10, such that the compactness of fit can be improved, and the welding operation of the two is facilitated. Certainly, the present application is not limited thereto, and in other embodiments, the conductive portion 42 may also be welded to the cover plate 5 to form an electrical connection, which is not limited herein.

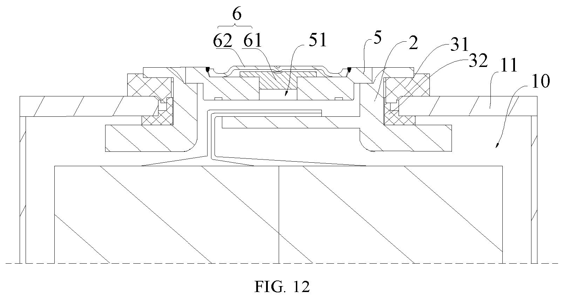

In some embodiments, as shown in FIG. 12, the battery cell 102 includes a cover plate 5 covering the accommodating groove 24, where the cover plate 5 is provided with a liquid injection hole 51 capable of communicating with the accommodating groove 24; and the battery cell 102 further includes a sealing structure 6 for sealing the liquid injection hole 51. In this way, when the electrolyte needs to be injected into the battery cell 102, the sealing structure 6 is not mounted at the liquid injection hole 51, or the sealing structure 6 is in a state where the liquid injection hole 51 is opened, and the electrolyte can be injected into the accommodating groove 24 through the liquid injection hole 51. After liquid injection, the sealing structure 6 can be mounted at the liquid injection hole 51, or the sealing structure 6 can be switched to a state where the liquid injection hole 51 is closed, such that the liquid injection hole 51 is sealed and closed to prevent the electrolyte from overflowing and to prevent external foreign matter from entering the accommodating cavity 10 from the liquid injection hole 51, thereby improving the reliability of the battery cell 102.

Thus, by forming the liquid injection hole 51 in the cover plate 5 that is relatively small and close to the outside, reliable sealing of a liquid injection inlet can be easily achieved through the sealing structure 6 to improve the working reliability of the battery cell 102, and flexible and diversified designs of the sealing structure 6 can be achieved.

In some embodiments, as shown in FIG. 12, the cover plate 5 does not have a portion stopped on an outer side (i.e., a side away from the accommodating cavity 10) of the sealing structure 6, such that the sealing structure 6 is adaptively mounted on the cover plate 5 from an outer side (i.e., a side away from the accommodating cavity 10) of the cover plate 5. In this way, the sealing structure 6 is set to be mounted on the cover plate 5 from the outer side of the cover plate 5 to seal the liquid injection hole 51, such that the sealing structure 6 is mounted after liquid injection, which can ensure the sealing performance of the liquid injection hole 51; and the mounting position is close to the outer side, which facilitates rapid assembly of the sealing structure 6. Moreover, the mounting of the sealing structure 6 does not adversely affect the connection between the electrode post 2 and the cover plate 5, thereby ensuring the reliability of the connection between the cover plate 5 and the electrode post 2.

The sealing structure 6 may be in a detachable form or a non-detachable fixed form. By way of example, when the sealing structure 6 is in the detachable form, the liquid injection hole 51 can be conveniently maintained. For example, when the electrolyte needs to be replenished, the sealing structure 6 can be disassembled, the liquid injection hole 51 is opened, the electrolyte is replenished and injected into the accommodating cavity 10 through the liquid injection hole 51, and then the sealing structure 6 is reassembled. For example, the sealing structure 6 can be detachably connected to the cover plate 5 by means of a thread, a screw fastener, or the like, thereby facilitating disassembly and assembly.

By way of example, when the sealing structure 6 is in the non-detachable fixed form, the sealing structure 6 can be fixed to the cover plate 5 by means of welding, riveting, or the like, thereby improving the sealing reliability of the sealing structure 6 for the liquid injection hole 51. For example, the liquid injection hole 51 may be in a multi-section form, and the sealing structure 6 may include a first sealing member 61 in interference fit with the liquid injection hole 51 and a second sealing member 62 covering the first sealing member 61 and welded to the cover plate 5. Alternatively, in some embodiments, the second sealing member 62 may be detachably connected to the cover plate 5 by a screw fastener, so as to limit the first sealing member 61 to a position in interference fit with the liquid injection hole 51.

In some embodiments of the present application, as shown in FIG. 12, at least part of the sealing structure 6 is embedded in the liquid injection hole 51. That is, the sealing structure 6 may be entirely embedded in the liquid injection hole 51, or only a part of the sealing structure 6 may be embedded in the liquid injection hole 51. Thus, on the one hand, space in the liquid injection hole 51 can be fully utilized to improve the sealing reliability of the sealing structure 6 for the liquid injection hole 51; and on the other hand, a height of the sealing structure 6 protruding out of the liquid injection hole 51 can be decreased, and space occupied by the sealing structure 6 outside the cover plate 5 can be reduced, which is beneficial to reducing an interference effect on the busbar component, increasing a connection area between the busbar component and the cover plate 5, and improving the current-carrying efficiency.

In some embodiments of the present application, the first housing wall 11 is an integrally formed cover plate 5, or the housing 1 further includes a second housing wall 13, the first housing wall 11 and at least one second housing wall 13 are integrally formed, and the second housing wall 13 extends toward one side in a thickness direction of the first housing wall 11. Thus, flexible design of the structural position of the electrode post 2 can be achieved, thereby extending the application range of the battery cell 102 in the embodiment of the present application.

It is worth noting that the second housing wall 13 may extend from an edge of the first housing wall 11, and when the first housing wall 11 is rectangular, at least one of four edges of the first housing wall 11 may extend out of the second housing wall 13, for example, only one edge of the first housing wall 11 extends out of the second housing wall 13, only two edges of the first housing wall 11 may extend out of the second housing wall 13 separately, three edges of the first housing wall 11 may extend out of the second housing wall 13 separately, or all the four edges of the first housing wall 11 may extend out of the second housing wall 13. By way of example, when the housing 1 is a rectangular housing, any wall surface of the rectangular housing may serve as the first housing wall 11.

For example, the housing 1 may include a housing body and a cover plate 5. The housing body defines a space with an open side, and the cover plate 5 is arranged on the open side of the housing body to form the accommodating cavity 10 between the housing body and the cover plate 5. In this case, a side surface of the housing body opposite to the cover plate 5 is the first housing wall 11, and a wall surface of the housing body connected between the first housing wall 11 and the cover plate 5 is the second housing wall 13; or a side surface of the housing body opposite to the cover plate 5 is the second housing wall 13, and a wall surface of the housing body connected between the second housing wall 13 and the cover plate 5 is the first housing wall 11; or the cover plate 5 is the first housing wall 11.

In a second aspect, an embodiment of the present application further provides a battery 100, including the battery cell 102 according to any one of the above solutions. It is worth noting that the battery 100 according to the embodiment of the present application may include a box 101, or may not include the box 101. Thus, the reliability of the battery cell 102 according to the embodiment of the present application is improved, thereby helping improve the performance of the battery 100.

By way of example, the battery 100 may further include a busbar component. There are a plurality of battery cells 102, at least two of which are electrically connected through the busbar component. Thus, a series connection and/or a parallel connection of the plurality of battery cells 102 can be achieved. For example, when the plurality of battery cells 102 are connected in series, the cover plate 5 of the positive electrode of one battery cell 102 is connected to the cover plate 5 of the negative electrode of the next battery cell 102 through one busbar component, and the cover plate 5 of the negative electrode of the battery cell 102 is connected to the cover plate 5 of the positive electrode of the previous battery cell 102 through another busbar component.

In a third aspect, an embodiment of the present application further provides an electric device, including the battery 100 according to any one of the above solutions, where the battery 100 is configured to provide electric energy for the electric device. The electric device may be any one of the above devices or systems using the battery 100. Since the performance of the battery 100 is improved, the working electrical performance of the electric device can be improved.

Hereinafter, a battery cell 102 according to a specific embodiment of the present application is described.

The battery cell 102 includes: a housing 1, electrode posts 2, and sealing insulation assemblies 3. A first housing wall 11 of the housing 1 is provided with mounting holes 12. The electrode posts 2 each include a penetrating portion 21 arranged in the mounting hole 12 in a penetrating manner, and a first abutting portion 22 and a second abutting portion 23 connected to the penetrating portion 21 and abutting against two sides of the first housing wall 11. The first abutting portion 22 abuts against an outer side of the first housing wall 11. The second abutting portion 23 abuts against an inner side of the first housing wall 11. The first abutting portion 22 abuts against the first housing wall by means of riveting. The sealing insulation assemblies 3 are insulated and fitted between the electrode posts 2 and the first housing wall 11, and each include a first insulating piece 31 at least partially arranged between the first abutting portion 22 and the first housing wall 11, and a second insulating piece 32 at least partially arranged between the second abutting portion 23 and the first housing wall 11.

The first insulating piece 31 includes a first body portion 311, a first extension portion 312, and a second extension portion 313, where the first body portion 311 is located on one side of the first abutting portion 22 facing the first housing wall 11, the first extension portion 312 is connected to the first body portion 311 and protrudes in a direction away from the first housing wall 11 relative to the first body portion 311, and is stopped on one side of the first abutting portion 22 away from a central axis L of the mounting hole 12, and the second extension portion 313 is connected to the first body portion 311 and extends into the mounting hole 12. The second insulating piece 32 includes a second body portion 321 and a third extension portion 322, where the second body portion 321 is located on one side of the second abutting portion 23 facing the first housing wall 11, and the third extension portion 322 is connected to the second body portion 321 and extends into the mounting hole 12.

An elastic modulus of the first insulating piece 31 is less than or equal to an elastic modulus of the second insulating piece 32, and the first insulating piece 31 is elastically compressed between the first abutting portion 22 and the first housing wall 11 to achieve sealing between the first abutting portion 22 and the first housing wall 11. In the above technical solution, when the electrode post 2 is riveted to the first housing wall 11, the deformed first abutting portion 22 applies an acting force to the first insulating piece 31. Since the elastic modulus of the first insulating piece 31 is less than or equal to the elastic modulus of the second insulating piece 32, the first insulating piece 31 has relatively strong deformability or relatively small rigidity relative to the second insulating piece 32, such that the first insulating piece 31 can absorb the acting force applied by the first abutting portion 22 deformed by riveting through deformation, thereby reducing the risk of cracking of the first insulating piece 31, improving the reliability of sealing between the first housing wall 11 and the electrode post 2, and improving the reliability of the battery cell 102.

It should be noted that, without contradictory, the embodiments in the present application may be combined with the features in the embodiments.

The above descriptions are merely preferred embodiments of the present application, and are not intended to limit the present application. For a person skilled in the art, various modifications and changes may be made to the present application. Any modification, equivalent replacement, or improvement made without departing from the spirit and principle of the present application shall fall within the protection scope of the present application.

## Claims

1. A battery cell, comprising:
a first housing wall, provided with mounting holes;
electrode posts, each comprising a penetrating portion arranged in the mounting hole in a penetrating manner, and a first abutting portion and a second abutting portion connected to the penetrating portion and abutting against two sides of the first housing wall, wherein the first abutting portion abuts against the first housing wall by means of riveting; and
sealing insulation assemblies, insulated and fitted between the electrode posts and the first housing wall, and each comprising a first insulating piece at least partially arranged between the first abutting portion and the first housing wall, and a second insulating piece at least partially arranged between the second abutting portion and the first housing wall;
wherein an elastic modulus of the first insulating piece is less than or equal to an elastic modulus of the second insulating piece, and the first insulating piece is elastically compressed between the first abutting portion and the first housing wall to achieve sealing between the first abutting portion and the first housing wall.

2. The battery cell according to claim 1, wherein the first insulating piece comprises a first body portion and a first extension portion, the first body portion is located on one side of the first abutting portion facing the first housing wall, and the first extension portion is connected to the first body portion, protrudes in a direction away from the first housing wall relative to the first body portion, and is stopped on one side of the first abutting portion away from a central axis of the mounting hole.

3. The battery cell according to claim 1 or 2, wherein the first insulating piece comprises a first body portion and a second extension portion, the first body portion is located on one side of the first abutting portion facing the first housing wall, and the second extension portion is connected to the first body portion and extends into the mounting hole.

4. The battery cell according to claim 3, wherein a first corner arranged toward the first housing wall is formed at a joint between the second extension portion and the first body portion, and the first corner is formed as a chamfer.

5. The battery cell according to claim 3 or 4, wherein a first corner arranged toward the first housing wall is formed at a joint between the second extension portion and the first body portion, the first housing wall comprises a second corner arranged corresponding to the first corner, and the second corner is formed as a chamfer.

6. The battery cell according to any one of claims 1 to 5, wherein the second insulating piece comprises:
a second body portion, located on one side of the second abutting portion facing the first housing wall; and
a third extension portion, connected to the second body portion and extending into the mounting hole.

7. The battery cell according to any one of claims 1 to 6, wherein the second abutting portion is arranged on an inner side of the first housing wall and comprises:
a second body portion, located on one side of the second abutting portion facing the first housing wall; and
a fourth extension portion, connected to one side of the second body portion away from the electrode post, and spaced between the first housing wall and an active material coating portion located on the inner side of the first housing wall.

8. The battery cell according to any one of claims 1 to 7, wherein the second insulating piece is elastically compressed between the second abutting portion and the first housing wall to achieve sealing between the second abutting portion and the first housing wall.

9. The battery cell according to any one of claims 1 to 8, wherein the elastic modulus of the first insulating piece is less than or equal to 6 MPa, and a compression amount of the first insulating piece is 10% to 50%.

10. The battery cell according to claim 9, wherein the compression amount of the first insulating piece is 32% to 38%.

11. The battery cell according to any one of claims 1 to 10, wherein a material of the first insulating piece comprises one of fluororubber, perfluoroalkoxy, polypropylene, and ethylene propylene diene monomer rubber.

12. The battery cell according to any one of claims 1 to 11, wherein in a radial direction of the mounting hole, an extension dimension of the second abutting portion is greater than or equal to an extension dimension of the first abutting portion.

13. The battery cell according to any one of claims 1 to 12, wherein the first abutting portion abuts against an outer side of the first housing wall, and the second abutting portion abuts against the inner side of the first housing wall.

14. The battery cell according to any one of claims 1 to 13, wherein the battery cell is provided with an accommodating cavity in the inner side of the first housing wall, the electrode post is provided with an accommodating groove that is open in a direction away from the accommodating cavity, the electrode post is provided with a communication hole, and the communication hole penetrates through a side groove wall of the accommodating groove close to the accommodating cavity, and communicates the accommodating cavity with the accommodating groove.

15. The battery cell according to claim 14, wherein the battery cell comprises a battery core assembly, the battery core assembly comprises an active material coating portion accommodated in the accommodating cavity and a conductive portion connected to the active material coating portion, and the conductive portion is arranged in the communication hole in a penetrating manner to be at least partially accommodated in the accommodating groove.

16. The battery cell according to claim 14 or 15, wherein the battery cell comprises a cover plate covering the accommodating groove, the cover plate is provided with a liquid injection hole capable of communicating with the accommodating groove, and the battery cell further comprises a sealing structure for sealing the liquid injection hole.

17. A battery, comprising the battery cell according to any one of claims 1 to 16.

18. An electric device, comprising the battery according to claim 17.
